# EUROPEAN PATENT SPECIFICATION

(11) **EP 1 624 380 B1**
(45) Date of publication and mention of the grant of the patent: **22.08.2007**
(21) Application number: 05015681.9
(22) Date of filing: 19.07.2005
(51) Int. Cl.: G06F 15/78, H03K 17/16, H03K 19/003

(54) **Vector processing apparatus, information processing apparatus, and vector processing method for reducing simultaneous switching noise**
Vektorverarbeitungsvorrichtung, Datenverarbeitungsvorrichtung und Datenverarbeitungsmethode zur Verringerung von Störsignalen bei gleichzeitigem Schalten
Dispositif de traitement vectoriel, dispositif de traitement d'information, et méthode de traitement d'information pour la réduction du bruit de commutation simultanée

(30) Priority: 26.07.2004 JP 2004217283
(43) Date of publication of application: 08.02.2006
(73) Proprietor: NEC CORPORATION, Tokyo (JP)
(72) Inventor: Toda, Hidemasa, Tokyo (JP)
(74) Representative: Baronetzky, Klaus

(56) References cited:
- DE-C1- 19 743 284
- US-A- 5 987 620
- US-A1- 2004 078 613
- MUKHERJEE A ED - SMAILAGIC A ET AL: "On the reduction of simultaneous switching in SoCs" VLSI, 2004. PROCEEDINGS. IEEE COMPUTER SOCIETY ANNUAL SYMPOSIUM ON LAFAYETTE, LA, USA 19-20 FEB. 2004, LOS ALAMITOS, CA, USA,IEEE COMPUT. SOC, US, 19 February 2004 (2004-02-19), pages 262-263, XP010726416 ISBN: 0-7695-2097-9

## Description

### Background of the Invention

The present invention relates to a vector processing apparatus, information processing apparatus, and vector processing method and, more particularly, to a vector processing apparatus, information processing apparatus, and vector processing method which reduce noise caused by simultaneous operations.

The number of logic circuits integrated into an LSI is increasing. If, however, the integrated logic circuits are simultaneously driven in synchronism with a single clock, noise is generated at the timing synchronized with the clock. This causes logic circuits to malfunction.

For example, Japanese Patent Laid-Open No. 58-149555 (reference 1) discloses a technique of improving performance by causing computing devices to sequentially execute computations as soon as element data is loaded from a main memory regardless of whether all data are loaded.

According to this technique, when load instructions from the main memory or store instructions to the main memory are to be executed, the respective computing devices execute computations at different timings. This produces a certain effect in reducing the occurrence of malfunction due to noise.

This technique, however, produces no effect in reducing the occurrence of malfunction due to noise in computations other than those for load and store processing.

The article "On the reduction of simultaneous switching in SoCs" by Mukherjee A Ed, Smailagic A et al. (PROCEEDINGS. IEEE COMPUTER SOCIETY ANNUAL SYMPOSIUM ON VLSI; LAFAYETTE, LA, USA 19-20 FEB. 2004, LOS ALAMITOS, CA, USA, pages 262 - 263) discloses a systematic approach to integrate clock tuning and flip-flop insertion to optimally spread out the switching times of IP-cores in system-on-a-chip circuits. Once a flip-flop is inserted in a net, the signal will arrive at its destination with an additional delay of one clock period. The switching times of the destination IP-cores can thus be adjusted.

US Patent No. 5987620 discloses a self-timed clock which is distributed to each pipeline stage of a pipeline-processing unit. The self-clock and processing unit of the current pipeline stage are enabled by the output clock of the self-clock from the previous pipeline stage. The self-clocks and processing units are enabled only with valid data. The pipeline-processing unit starts by enabling one pipeline stage at a time leading to maximum power dissipation when all the pipeline stages are operating.

### Summary of the Invention

The present invention according to apparatus claim 1 and method claim 13 has been made to solve such a problem, and has as its object to reduce noise due to simultaneous operations not only in computations for load and store processing but also other computations.

### Brief Description of the Drawings

Fig. 1 is a block diagram showing the arrangement of a vector processing apparatus according to the first embodiment of the present invention;
Fig. 2 is a timing chart showing the operation of the vector processing apparatus shown in Fig. 1;
Fig. 3 is a block diagram showing the arrangement of a vector processing apparatus according to the second embodiment of the present invention;
Fig. 4 is a block diagram showing the arrangement of a vector processing apparatus according to the third embodiment of the present invention;
Fig. 5 is a block diagram showing the arrangement of a timing adjusting unit in Fig. 4;
Fig. 6 is a timing chart showing the operation of the vector processing apparatus shown in Fig. 4;
Fig. 7 is a block diagram showing the arrangement of the vector processing apparatus according to the fourth embodiment of the present invention; and
Fig. 8 is a block diagram showing the arrangement of an operation control information generating unit in Fig. 7.

### Description of the Preferred Embodiments

The embodiments of the present invention will be described in detail below with reference to the accompanying drawings. Assume that in this case, 64 vector element data are processed per vector computation instruction. This, however, is merely an example. The number of vector element data to be processed per vector computation instruction is not limited to 64.

### First Embodiment

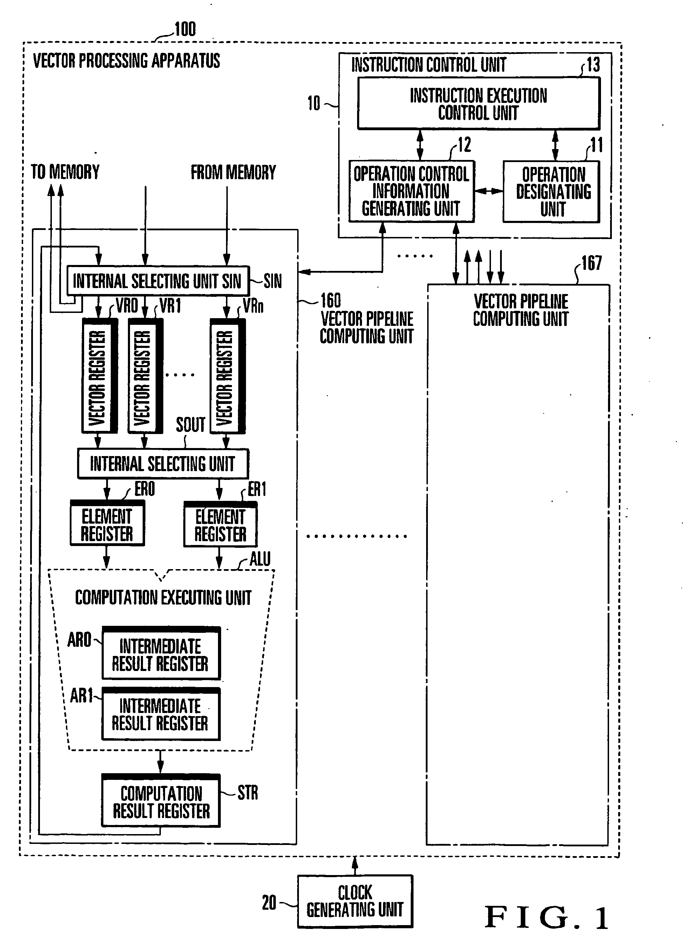

As shown in Fig. 1, a vector processing apparatus 100 according to the first embodiment of the present invention includes an instruction control unit 10 and a plurality of vector pipeline computing units 160 to 167. The number of vector pipeline computing units can be arbitrarily set.

The instruction control unit 10 includes an instruction execution control unit 13 which generates and outputs execution control information for a vector computation instruction, an operation designating unit 11 which holds noise reduction designation information indicating whether to execute noise reduction operation, and an operation control information generating unit 12 which receives control information from the instruction execution control unit 13, generates various kinds of operation control information in accordance with the noise reduction designation information from the operation designating unit 11, and outputs them to the instruction execution control unit 13 and the vector pipeline computing units 160 to 167. Operation control information is information which instructs each of the vector pipeline computing units 160 to 167 to start and execute processing.

The operation designating unit 11 is comprised of, for example, an F/F (Flip-Flop) and the like. Noise reduction designation information can be externally set in the operation designating unit 11 as an initialization mode for hardware operation.

The vector pipeline computing units 160 to 167 operate concurrently. Each of the vector pipeline computing units 160 to 167 includes vector registers VR0 to VRn (n = 1, 2,...) serving as data holding units which hold vector element data, an internal selecting unit SIN such as a cross bar which selects one of the vector registers VR0 to VRn in which vector element data is to be written, an internal selecting unit SOUT such as a cross bar which selects one of the vector registers VR0 to VRn from which vector element data is to be read out, element registers ER0 and ER1 which store vector element data from the internal selecting unit SOUT, at least one computation executing unit ALU which executes addition, subtraction, multiplication, and division for the vector element data stored in the element registers ER0 and ER1, and a computation result register STR which stores the computation result obtained by the computation executing unit ALU.

The vector registers VR0 to VRn are comprised of, for example, registers and the like. Each of the vector registers VR0 to VRn stores, for example, eight vector element data.

The computation executing unit ALU further includes intermediate result registers AR0 and AR1 which store the intermediate results of computation. It is arbitrarily determined whether to mount the element registers ER0 and ER1, intermediate result registers AR0 and AR1, and computation result register STR and to determine where they are mounted.

For example, the element registers ER0 and ER1 are set as the first pipeline stage. The intermediate result register AR0 can be set as the second pipeline stage. The intermediate result register AR1 is set as the third pipeline stage. The computation result register STR is set as the fourth pipeline stage. The vector registers VR0 to VRn are set as the fifth pipeline stage.

Vector element data are allocated to the vector registers VR0 to VRn in the vector pipeline computing units 160 to 167 by an interleave scheme.

Vector element data a0, a8, a16, a24, a32, a40, a48, and a56 are stored in the vector register VR0 of the vector pipeline computing unit 160. Vector element data a1, a9, a17, a25, a33, a41, a49, and a57 are stored in the vector register VR0 of the vector pipeline computing unit 161. Vector element data a7, a15, a23, a31, a39, a47, a55, and a63 are stored in the vector register VR0 of the vector pipeline computing unit 167.

Likewise, vector element data b0, b8, b16, b24, b32, b40, b48, and b56 are stored in the vector register VR1 of the vector pipeline computing unit 160. Vector element data b1, b9, b17, b25, b33, b41, b49, and b57 are stored in the vector register VR1 of the vector pipeline computing unit 161. Vector element data b7, b15, b23, b31, b39, b47, b55, and b63 are stored in the vector register VR1 of the vector pipeline computing unit 167.

Subsequently, other vector element data are stored in the vector registers VR2 to VRn in the same manner.

The respective units of the vector processing apparatus 100 operate in accordance with clocks output from a clock generating unit 20.

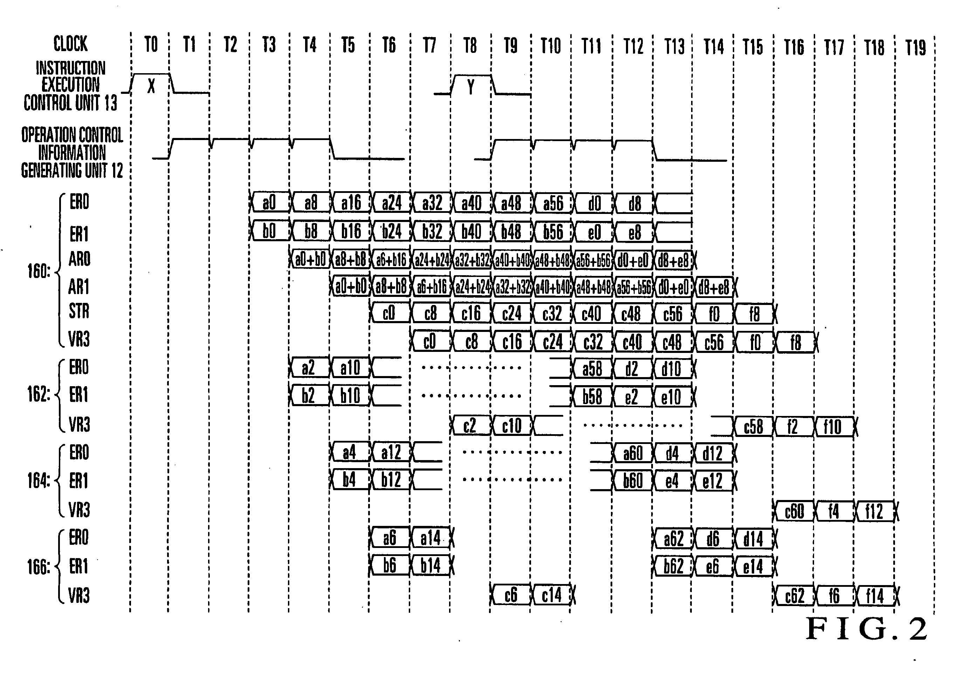

The operation of the vector processing apparatus 100 will be described next with reference to Fig. 2.

Assume that the vector processing apparatus 100 executes a vector computation instruction Y following a vector computation instruction X. The vector computation instruction X is, for example, an instruction to add the vector element data a0 to a63 in the vector registers VR0 to the vector element data b0 to b63 in the vector registers VR1 and store the resultant data as vector element data c0 to c63 in the vector registers VR2. The vector computation instruction Y is, for example, an instruction to add vector element data d0 to d63 in the vector registers VR3 to vector element data e0 to e63 in the vector registers VR4 and store the resultant data as vector element data f0 to f63 in the vector registers VR5.

The computation executing unit ALU executes computation for one element data pair per clock. Therefore, eight clocks are required for the execution of each of vector computation instructions X and Y. In the operation designating unit 11, noise reduction designation information indicating that noise reduction operation is to be executed is set in advance.

The instruction execution control unit 13 generates control information for the execution of the vector computation instruction X at a clock T0, and outputs the information to the operation control information generating unit 12.

Upon receiving control information from the instruction execution control unit 13, the operation control information generating unit 12 generates operation control information for instructing the execution of the vector computation instruction X on the basis of the clock input from the clock generating unit 20, and outputs the information to the vector pipeline computing units 160 to 167 at different timings. More specifically, the operation control information generating unit 12 outputs the operation control information for instructing the execution of the vector computation instruction X to the vector pipeline computing units 160 and 161 at a clock T1. The operation control information generating unit 12 outputs the operation control information for instructing the execution of the vector computation instruction X to the vector pipeline computing units 162 and 163 at a clock T2. The operation control information generating unit 12 outputs the operation control information for instructing the execution of the vector computation instruction X to the vector pipeline computing units 164 and 165 at a clock T3. The operation control information generating unit 12 outputs the operation control information for instructing the execution of the vector computation instruction X to the vector pipeline computing units 166 and 167 at a clock T4.

The vector pipeline computing unit 160 will be exemplified below.

In accordance with operation control information for the vector computation instruction X from the instruction control unit 10, the internal selecting unit SOUT reads out vector element data a0 from the vector register VR0 and the vector element data b0 from the vector register VR1. The readout vector element data a0 is stored in the element register ER0, and the readout vector element data b0 is stored in the element register ER1 (the clock T2 in Fig. 2).

The computation executing unit ALU computes the vector element data a0 from the element register ER0 and the vector element data b0 from the element register ER1, and stores the first intermediate result in the intermediate result register AR0 (clock T3). The computation executing unit ALU then computes the first intermediate result from the intermediate result register AR0, and stores the second intermediate result in the intermediate result register AR1 (clock T4). The computation executing unit ALU computes the second intermediate result from the intermediate result register AR1, and stores the computation result (c0 = a0 + b0) in the computation result register STR (clock T5). The computation result (c0 = a0 + b0) from the computation result register STR is selected by the internal selecting unit SIN and stored in the vector register VR3.

The internal selecting unit SOUT reads out the vector element data a8 from the vector register VR0, and the vector element data b8 from the vector register VR1, and stores them respectively in the element registers ER0 and ER1.

In this manner, computations are executed between the vector element data a0, a8, a16, a24, a32, a40, a48, and a56 and the vector element data b0, b8, b16 b24, b32, b40, b48, and b56, and the computation results (c0, c8, c16, c24, c32, c40, c48, and c56) are stored in the vector register VR3 (clocks T6 to T13).

The vector pipeline computing unit 161 sequentially executes computations between the vector element data a1, a9, a17, a25, a33, a41, a49, and a57 and the vector element data b1, b9, b17, b25, b33, b41, b49, and b57 at timings (from the clock T2) similar to those in the vector pipeline computing unit 160, and stores the computation results (c1,..., c57) in the vector register VR3 (clocks T6 to T13).

The vector pipeline computing unit 162 (vector pipeline computing unit 163) starts processing from the clock T3 with a shift of one clock. Computations between the vector element data a2 (a3), a10 (a11), a18 (a19), a26 (a27), a34 (a35), a42 (a43), a50 (a51), and a58 (a59) and the vector element data b2 (b3), b10 (b11), b18 (b19), b26 (b27), b34 (b35), b42 (b43), b50 (b51), and b58 (b59) are executed, and the computation results (c2 (c3),..., c58 (c59)) are stored in the vector register VR3 (clocks T7 to T14).

The vector pipeline computing unit 164 (vector pipeline computing unit 165) starts processing from the clock T4 with a shift of one clock. Computations between the vector element data a4 (a5), a12 (a13), a20 (a21), a28 (a29), a36 (a37), a44 (a45), a52 (a53), and a60 (a61) and the vector element data b4 (b5), b12 (b13), b20 (b21), b28 (b29), b36 (b37), b44 (b45), b52 (b53), and b60 (b61) are executed, and the computation results (c4 (c5),..., c60 (c61)) are stored in the vector register VR3 (clocks T8 to T15).

The vector pipeline computing unit 166 (vector pipeline computing unit 167) starts processing from the clock T5 with a shift of one clock. Computations between the vector element data a6 (a7), a14 (a15), a22 (a23), a30 (a31), a38 (a39), a46 (a47), a54 (a55), and a62 (a63) and the vector element data b6 (b7), b14 (b15), b22 (b23), b30 (b31), b38 (b39), b46 (b47), b54 (b55), and b62 (b63) are executed, and the computation results (c6 (c7),..., c62 (c63)) are stored in the vector register VR3 (clocks T9 to T16).

The instruction execution control unit 13 then generates control information for the execution of the vector computation instruction Y and outputs the information to the operation control information generating unit 12 at a clock T8.

Upon receiving the control information from the instruction execution control unit 13, the operation control information generating unit 12 generates operation control information for instructing the execution of the vector computation instruction Y on the basis of a clock input from the clock generating unit 20, and outputs the information to the vector pipeline computing units 160 to 167 at different timings. More specifically, the operation control information generating unit 12 outputs operation control information for instructing the execution of the vector computation instruction Y to the vector pipeline computing units 160 and 161 at the clock T9. The operation control information generating unit 12 outputs operation control information for instructing the execution of the vector computation instruction Y to the vector pipeline computing units 162 and 163 at the clock T10. The operation control information generating unit 12 outputs operation control information for instructing the execution of the vector computation instruction Y to the vector pipeline computing units 164 and 165 at the clock T11. The operation control information generating unit 12 outputs operation control information for instructing the execution of the vector computation instruction Y to the vector pipeline computing units 166 and 167 at the clock T12.

The vector pipeline computing units 160 to 167 continuously execute the vector computation instructions Y like the vector computation instructions X. That is, the vector pipeline computing unit 160 starts processing the vector computation instruction Y from the clock T10, adds the vector element data in the vector register VR3 to the vector element data in the vector register VR4, and stores the resultant data in the vector register VR5.

As described above, the vector pipeline computing units 160 to 167 sequentially operate in pairs with a shift of a 1T clock cycle. This shifted operation can be performed not only for vector computation instructions but also for vector load instructions (instructions to load vector element data from the memory into the vector registers VR0 to VRn through the internal selecting unit SIN), and vector store instructions (instructions to store vector element data from the vector registers VR0 to VRn to the memory through the internal selecting unit SOUT). Vector computation instructions, vector load instructions, vector store instructions, and the like are generically called "vector instructions".

Since the processing operations of the vector pipeline computing units 160 to 167 are temporarily shifted from each other, the amount of switching for the start of simultaneous operations of circuits at the start of the execution of a vector computation instruction (clocks T2 to T5 in particular) can be reduced. As a consequence, noise caused by simultaneous operation can be reduced. The operation of reducing noise by temporarily shifting the start and execution of processing by the vector pipeline computing units 160 to 167 will be called "noise reduction operation".

This embodiment has exemplified the case wherein the operation control information generating unit 12 outputs operation control information to the vector pipeline computing units 160 and 161, the vector pipeline computing units 162 and 163, the vector pipeline computing units 164 and 165, and the vector pipeline computing units 166 and 167 at timings shifted from each other by one clock. However, such information may be output at timings shifted from each other by two or more clocks. Alternatively, operation control information may be output to the vector pipeline computing units 160 to 167 at different timings.

### Second Embodiment

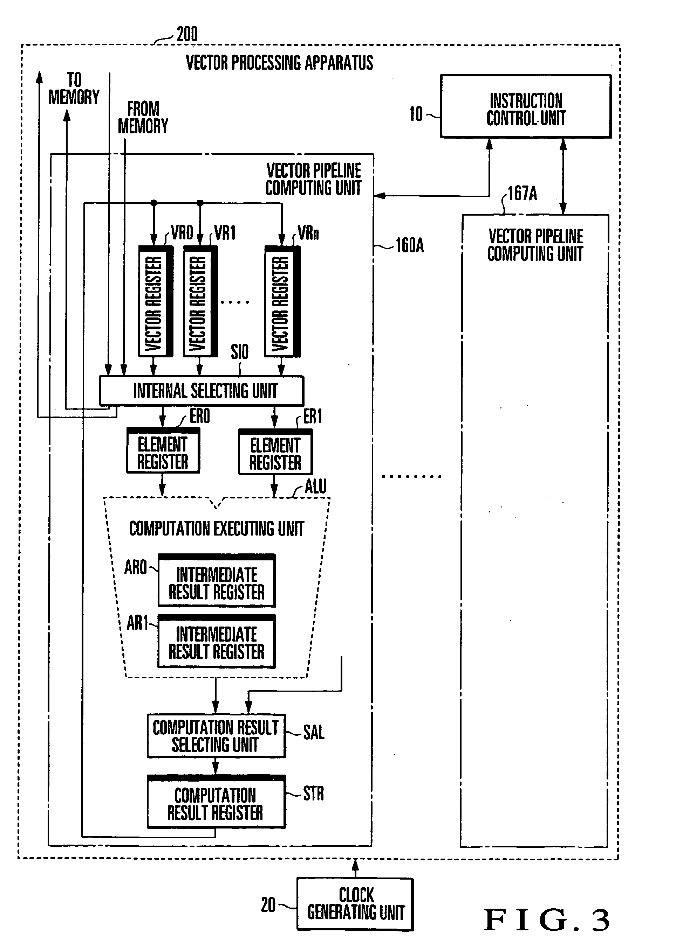

As shown in Fig. 3, in a vector processing apparatus 200 according to the second embodiment of the present invention, the internal selecting unit SIN in the vector processing apparatus 100 shown in Fig. 1 is integrated in the internal selecting unit SOUT to become an internal selecting unit SIO. As a consequence, a computation result register STR and vector registers VR0 to VRn are directly connected to each other. If this apparatus comprises a plurality of computation executing units ALU, a computation result selecting unit SAL may be provided at the input of the computation result register STR. The operation of the vector processing apparatus 200 is equivalent to that of the vector processing apparatus 100 described above except that the operation of the internal selecting unit SIN in the apparatus 100 becomes simple transfer operation instead of selection operation.

### Third Embodiment

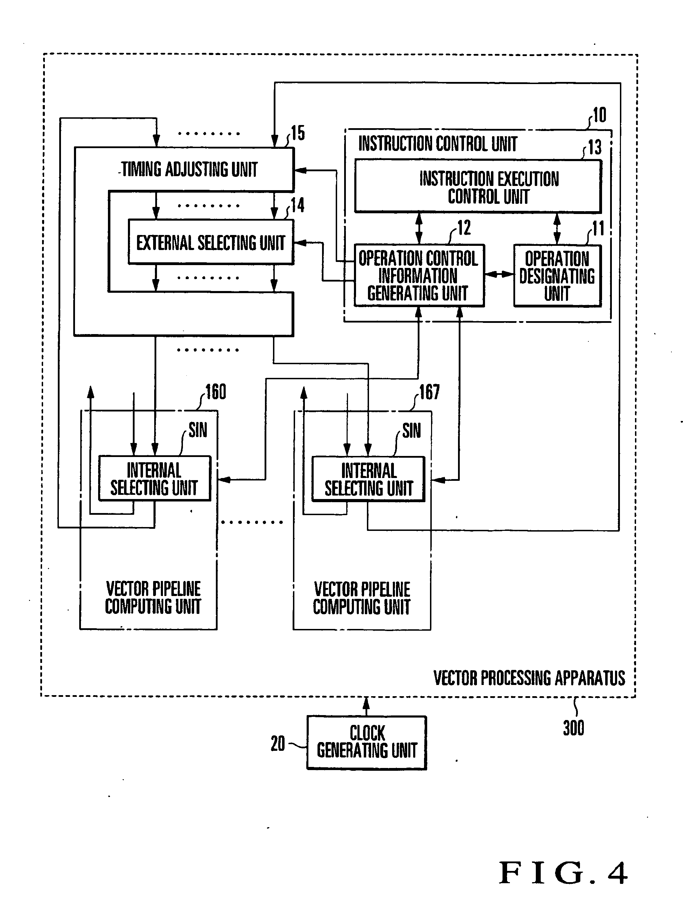

As shown in Fig. 4, a vector processing apparatus 300 according to the third embodiment of the present invention includes an external selecting unit 14 such as a cross bar and a timing adjusting unit 15 in addition to the vector processing apparatus 100 (or the vector processing apparatus 200 shown in Fig. 3). Fig. 4 shows the schematic arrangement of each of vector pipeline computing units 160 to 167.

An operation control information generating unit 12 of an instruction control unit 10 also outputs the same information as operation control information output to the vector pipeline computing units 160 to 167 to the external selecting unit 14 and timing adjusting unit 15. The external selecting unit 14 selects vector element data in accordance with operation control information from the operation control information generating unit 12. The timing adjusting unit 15 adjusts the input timing of vector element data to the external selecting unit 14 and the output timing of vector element data from the external selecting unit 14.

The external selecting unit 14 and timing adjusting unit 15 are used for instructions for processing vector element data among the vector pipeline computing units 160 to 167. For example, such instructions include instructions to transfer vector element data between the vector pipeline computing units 160 to 167 and an instruction to calculate the sum total of all vector element data.

Instructions to transfer vector element data between the vector pipeline computing units 160 to 167 include, for example, right rotate instructions Z. The right rotate instructions Z are instructions to rotate vector element data a0, a8, a16, a24, a32, a40, a48, and a56 stored in a vector register VR0 in the vector pipeline computing unit 160, vector element data a1, a9, a17, a25, a33, a41, a49, and a57 stored in a vector register VR0 in the vector pipeline computing unit 161,..., and vector element data a7, a15, a23, a31, a39, a47, a55, and a63 stored in a vector register VR0 in the vector pipeline computing unit 167 to the right by seven vector element data, and store the resultant data in a vector registers VR1. As a result, the vector element data a7, a15, a23, a31, a39, a47, a55, and a63 are stored in the vector register VR1 in the vector pipeline computing unit 160, the vector element data a0, a8, a16, a24, a32, a40, a48, and a56 are stored in the vector register VR1 in the vector pipeline computing unit 161,..., and the vector element data a6, a14, a22, a30, a38, a46, a54, and a62 are stored in the vector pipeline computing unit 167.

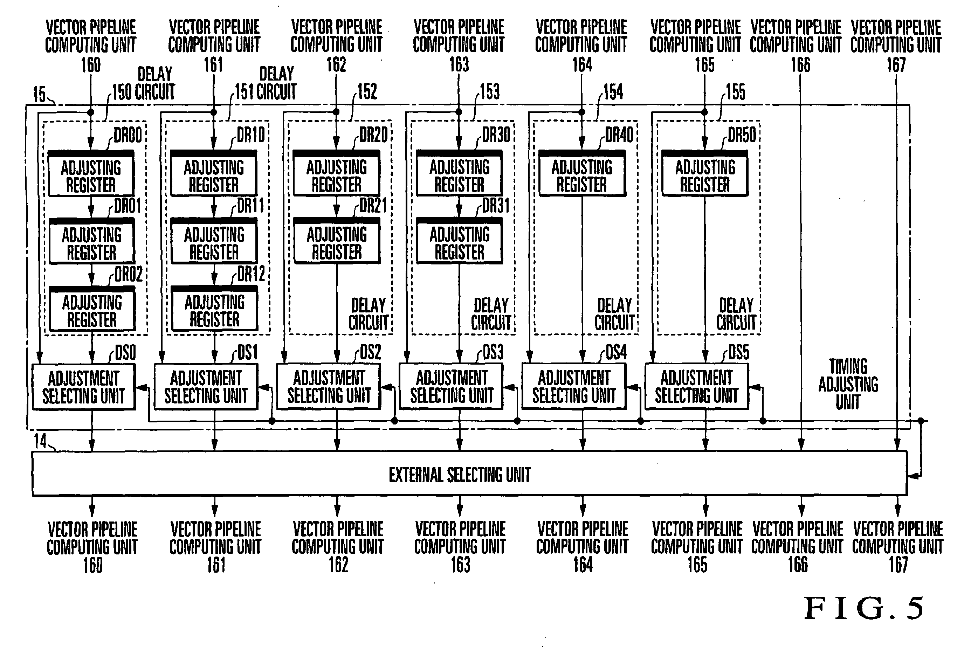

The arrangement of the timing adjusting unit 15 will be described with reference to Fig. 5. Fig. 5 shows the arrangement of the timing adjusting unit 15 provided on the input side of the external selecting unit 14. In this case, the vector pipeline computing units 160 to 167 are directly connected to the output side of the external selecting unit 14.

The timing adjusting unit 15 shown in Fig. 5 outputs vector element data input from the vector pipeline computing units 160 to 167 at different timings to the external selecting unit 14 at the same timing. More specifically, the timing adjusting unit 15 includes delay circuits 150 to 155 and adjustment selecting units DS0 to DS5.

The delay circuit 150 outputs vector element data input from the vector pipeline computing unit 160 upon delaying the data by a time corresponding to the vector pipeline computing unit 160. The delay circuit 151 outputs vector element data input from the vector pipeline computing unit 161 upon delaying the data by a time corresponding to the vector pipeline computing unit 161. The delay circuit 152 outputs vector element data input from the vector pipeline computing unit 162 upon delaying the data by a time corresponding to the vector pipeline computing unit 162. The delay circuit 153 outputs vector element data input from the vector pipeline computing unit 163 upon delaying the data by a time corresponding to the vector pipeline computing unit 163. The delay circuit 154 outputs vector element data input from the vector pipeline computing unit 164 upon delaying the data by a time corresponding to the vector pipeline computing unit 164. The delay circuit 155 outputs vector element data input from the vector pipeline computing unit 165 upon delaying the data by a time corresponding to the vector pipeline computing unit 165.

In this case, the times corresponding to the vector pipeline computing units 160 to 167 are times to cancel out delay times given when the instruction control unit 10 outputs operation control information to other vector pipeline computing units. More specifically, the time corresponding to the vector pipeline computing units 160 and 161 correspond to a 3T clock cycle, the time corresponding to the vector pipeline computing units 162 and 163 corresponds to a 2T clock cycle, and the time corresponding to the vector pipeline computing units 164 and 165 corresponds to a 1T clock cycle.

The delay circuits 150 to 155 are configured in the following manner by using adjusting registers DR by which a delay time corresponding to a 1T clock cycle is obtained. The delay circuit 150 has an arrangement in which adjusting registers DR00, DR01, and DR02 are cascaded. The delay circuit 151 has an arrangement in which adjusting registers DR10, DR11, and DR12 are cascaded. The delay circuit 152 has an arrangement in which adjusting registers DR20 and DR21 are cascaded. The delay circuit 153 has an arrangement in which adjusting registers DR30 and DR31 are cascaded. The delay circuit 154 comprises an adjusting register DR40. The delay circuit 155 comprises an adjusting register DR50.

The adjustment selecting unit DS0 selects either vector element data from the vector pipeline computing unit 160 or vector element data from the delay circuit 150. The adjustment selecting unit DS1 selects vector element data from the vector pipeline computing unit 161 or vector element data from the delay circuit 151. The adjustment selecting unit DS2 selects vector element data from the vector pipeline computing unit 162 or vector element data from the delay circuit 152. The adjustment selecting unit DS3 selects vector element data from the vector pipeline computing unit 163 or vector element data from the delay circuit 153. The adjustment selecting unit DS4 selects vector element data from the vector pipeline computing unit 164 or vector element data from the delay circuit 154. The adjustment selecting unit DS5 selects vector element data from the vector pipeline computing unit 165 or vector element data from the delay circuit 155. The adjustment selecting units DS0 to DS5 select vector element data depending on operation control information input from the operation control information generating unit 12 to the adjustment selecting units DS0 to DS5.

Note that the timings of vector element data from the vector pipeline computing units 166 and 167 are not adjusted.

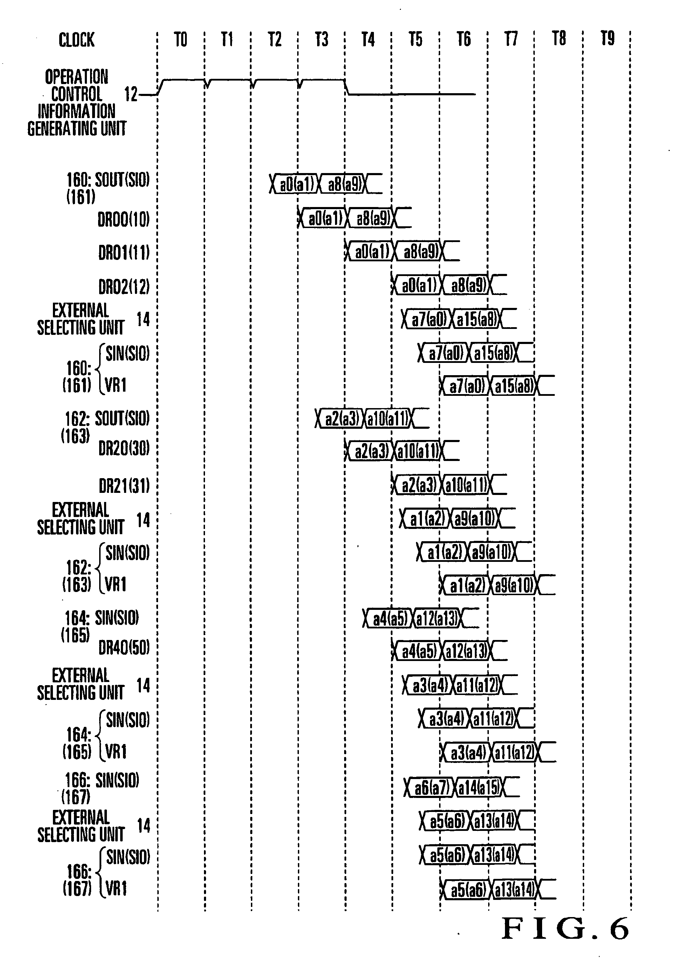

The operation of the vector processing apparatus 300 shown in Fig. 4 will be described next with reference to Fig. 6.

Referring to Fig. 6, the operation control information generating unit 12 outputs operation control information for instructing the execution of the right rotate instruction Z to the vector pipeline computing units 160 and 161 at a clock T1. The operation control information generating unit 12 also outputs the same right rotate instruction Z to the timing adjusting unit 15 (adjustment selecting units DS0 and DS1) and external selecting unit 14. The operation control information generating unit 12 outputs operation control information for instructing the execution of the right rotate instruction Z to the vector pipeline computing units 162 and 163 at a clock T2. The operation control information generating unit 12 also outputs the same right rotate instruction Z to the timing adjusting unit 15 (adjustment selecting units DS2 and DS3) and external selecting unit 14. The operation control information generating unit 12 outputs operation control information for instructing the execution of the right rotate instruction Z to the vector pipeline computing units 164 and 165 at a clock T3. The operation control information generating unit 12 also outputs the same right rotate instruction Z to the timing adjusting unit 15 (adjustment selecting units DS4 and DS5) and external selecting unit 14. The operation control information generating unit 12 outputs operation control information for instructing the execution of the right rotate instruction Z to the vector pipeline computing units 166 and 167 at a clock T4. The operation control information generating unit 12 also outputs the same right rotate instruction Z to the timing adjusting unit 15 (adjustment selecting units DS6 and DS7) and external selecting unit 14.

When operation control information is input to the vector pipeline computing unit 160 (vector pipeline computing unit 161), an internal selecting unit SOUT (or an internal selecting unit SIO) reads out the vector element data a0 (a1) stored in the vector register VR0, and outputs it to the timing adjusting unit 15. In the timing adjusting unit 15, the vector element data a0 (a1) is stored in the adjusting register DR00 (adjusting register DR10) of the delay circuit 150 (delay circuit 151) (the clock T2 in Fig. 6). The vector element data a0 (a1) is stored in the adjusting register DR01 (adjusting register DR11) (clock T3). The vector element data a0 (a1) is stored in the adjusting register DR02 (adjusting register DR12) (clock T4). The vector element data a0 (a1) is selected from the adjusting register DR02 (adjusting register DR12) by the adjustment selecting unit DS0 (adjustment selecting unit DS1), and is output to the external selecting unit 14 (clock T5).

When operation control information is input to the vector pipeline computing unit 162 (vector pipeline computing unit 163), the internal selecting unit SOUT (or the internal selecting unit SIO) reads out the vector element data a2 (a3) stored in the vector register VR0, and outputs it to the timing adjusting unit 15. In the timing adjusting unit 15, the vector element data a2 (a3) is stored in the adjusting register DR20 (adjusting register DR30) of the delay circuit 152 (delay circuit 153) (clock T3). The vector element data a2 (a3) is stored in the adjusting register DR21 (adjusting register DR21) (clock T4). The vector element data a2 (a3) is stored in the adjusting register DR21 (adjusting register DR121) (clock T4). The vector element data a2 (a3) is selected from the adjusting register DR21 (adjusting register DR21) by the adjustment selecting unit DS2 (adjustment selecting unit DS3), and is output to the external selecting unit 14 (clock T5).

When operation control information is input to the vector pipeline computing unit 164 (vector pipeline computing unit 165), the internal selecting unit SOUT (or the internal selecting unit SIO) reads out the vector element data a4 (a5) stored in the vector register VR0, and outputs it to the timing adjusting unit 15. In the timing adjusting unit 15, the vector element data a4 (a5) is stored in the adjusting register DR40 (adjusting register DR50) of the delay circuit 154 (delay circuit 155) (clock T4). The vector element data a4 (a5) is selected from the adjusting register DR40 (adjusting register DR50) by the adjustment selecting unit DS4 (adjustment selecting unit DS5), and is output to the external selecting unit 14 (clock T5).

When operation control information is input to the vector pipeline computing unit 166 (vector pipeline computing unit 167), the internal selecting unit SOUT (or the internal selecting unit SIO) reads out the vector element data a6 (a7) stored in the vector register VR0, and outputs it to the timing adjusting unit 15. The vector element data a4 (a5) is output to the external selecting unit 14 through the timing adjusting unit 15 (clock T5).

Subsequently, the external selecting unit 14 receives the vector element data a0, a1, a2, a3, a4, a5, a6, and a7 from the timing adjusting unit 15. On the basis of operation control information from the operation control information generating unit 12, the external selecting unit 14 outputs the vector element data a7, a0, a1, a2, a3, a4, a5, and a6 respectively to the vector pipeline computing units 160, 161, 162, 163, 164, 165, 166, and 167 (clock T5).

The vector element data a7, a0, a1, a2, a3, a4, a5, and a6 are stored in the vector registers VR1 through the internal selecting units SIN (or the internal selecting units SIO) of the vector pipeline computing units 160 to 167 (clock T5). The vector element data a15, a8, a9, a10, a11, a12, a13, and a14 are stored in the vector registers VR1 through the internal selecting units SIN of the vector pipeline computing units 160 to 167 (clock T6). In this manner, the right rotate instructions Z are sequentially executed.

The vector processing apparatus 300 shown in Fig. 4 has an effect of being capable of easily executing instructions for processing of vector element data among the vector pipeline computing units 160 to 167 as compared with the vector processing apparatuses 100 and 200 shown in Figs. 1 and 3.

### Fourth Embodiment

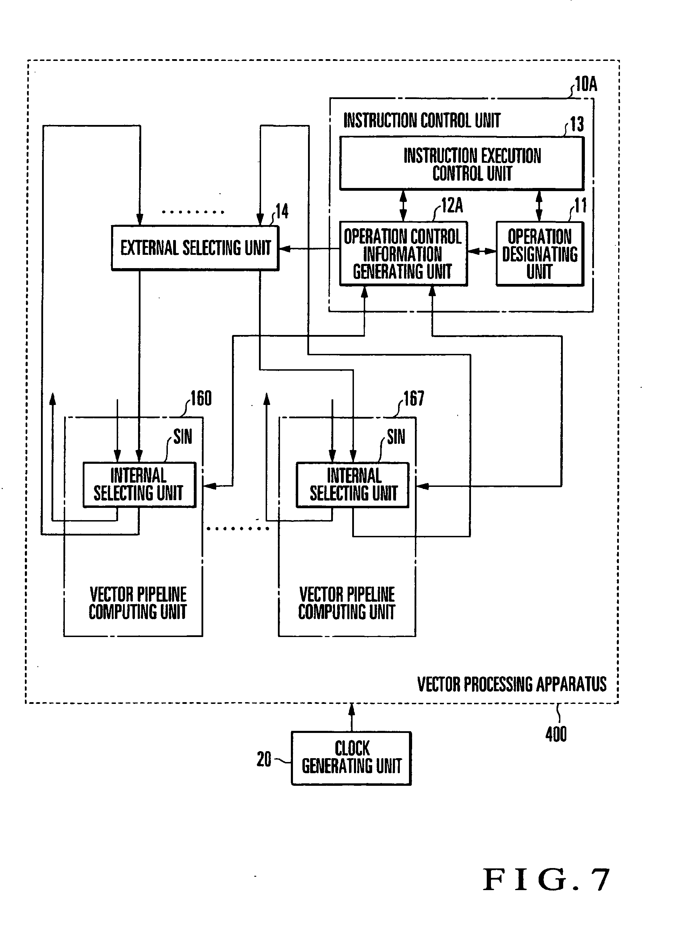

As shown in Fig. 7, a vector processing unit 400 according to the fourth embodiment of the present invention has an arrangement equivalent to that of the vector processing apparatus 300 shown in Fig. 4 from which the timing adjusting unit 15 is omitted. In executing instructions for processing of vector element data among vector pipeline computing units 160 to 167, an operation control information generating unit 12A of an instruction control unit 10A outputs pieces of operation control information to the vector pipeline computing units 160 to 167 without shifting them. For example, in executing right rotate instructions Z, the operation control information generating unit 12A outputs pieces of operation control information for the start of execution of the right rotate instructions Z to all the vector pipeline computing units 160 to 167 at a clock T4 in Fig. 6.

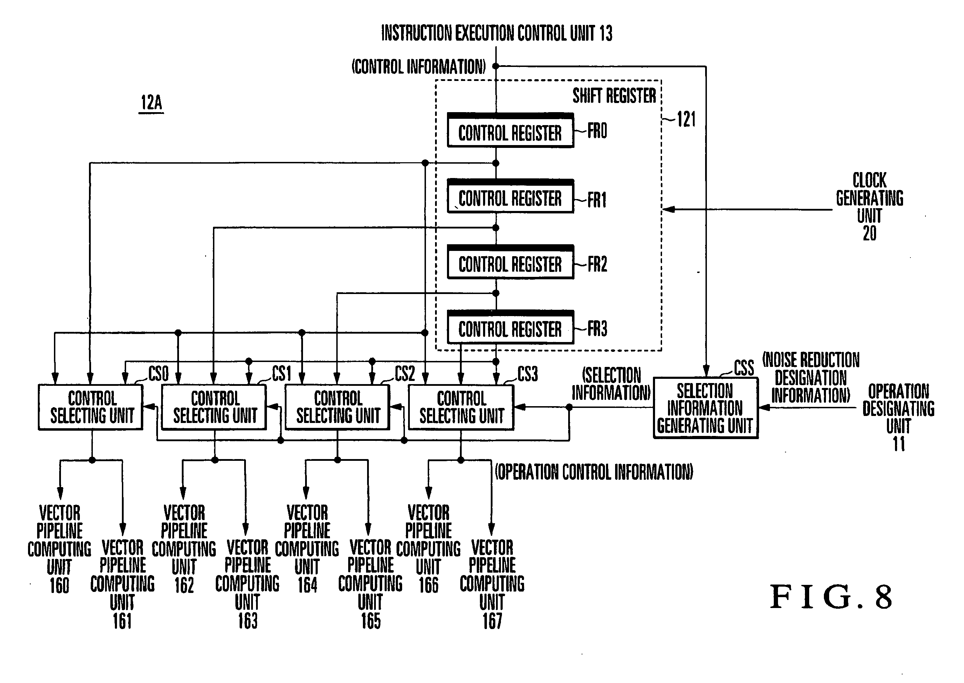

The arrangement of the operation control information generating unit 12A will be described with reference to Fig. 8.

The operation control information generating unit 12A includes a shift register 121, selection information generating unit CSS, control selecting unit CS0, control selecting unit CS1, control selecting unit CS2, and control selecting unit CS3. The shift register 121 is a four-stage shift register comprising a control register FR0, control register FR1, control register FR2, and control register FR3. Control information is input from an instruction execution control unit 13 to the first stage (control register FRO) of the shift register 121. This control information is shifted from a given stage to another stage of the shift register 121 every time a clock is input from a clock generating unit 20. The selection information generating unit CSS generates selection information for the control selecting units, CS0 to CS3 on the basis of control information from the instruction execution control unit 13 and noise reduction designation information from the operation designating unit 11.

Selection information is generated in the following manner.
(1) When noise reduction designation information does not designate noise reduction operation:
   Selection information causes the control selecting units CS0 to CS3 to select the control information stored in the first stage of the shift register 121, i.e., the control information from the control register FR0. The control selecting units CS0 to CS3 may be caused to select the control information stored in a specific stage of the shift register 121 other than the first stage, i.e., the control information from any one of the control registers FR1 to FR3.
(2) When noise reduction designation information designates noise reduction operation, and control information from the instruction execution control unit 13 does not indicate an instruction for the execution of processing of vector element data among the vector pipeline computing units 160 to 167:
   The control information causes the control selecting unit CS0 to select the control information stored in the first stage of the shift register 121, i.e., the control information from the control register FR0. The control information causes the control selecting unit CS1 to select the control information stored in the second stage of the shift register 121, i.e., the control information from the control register FR1. The control information causes the control selecting unit CS2 to select the control information stored in the third stage of the shift register 121, i.e., the control information from the control register FR2. The control information causes the control selecting unit CS3 to select the control information stored in the last stage of the shift register 121, i.e., the control information from the control register FR3. That is, the control information causes each of the control selecting units CS0 to CS3 to select one of the pieces of control information stored in the respective stages of the shift register 121.
(3) When noise reduction designation information designates noise reduction operation, and control information from the instruction execution control unit 13 indicates an instruction for the execution of processing of vector element data among the vector pipeline computing units 160 to 167:
   The control information causes the control selecting units CS0 to CS3 to select the control information stored in the last stage of the shift register 121, i.e., the control information from the control register FR3.

The control selecting unit CS0 outputs the control information selected in accordance with the selection information, as operation control information, to the vector pipeline computing units 160 and 161. The control selecting unit CS1 outputs the control information selected in accordance with the selection information, as operation control information, to the vector pipeline computing units 162 and 163. The control selecting unit CS2 outputs the control information selected in accordance with the selection information, as operation control information, to the vector pipeline computing units 164 and 165. The control selecting unit CS3 outputs the control information selected in accordance with the selection information, as operation control information, to the vector pipeline computing units 166 and 167.

In the case of (1), pieces of operation control information are output to all the vector pipeline computing units 160 to 167 at the same timing. In the case of (2), pieces of operation control information are sequentially output to the vector pipeline computing units 160 and 161, the vector pipeline computing units 162 and 163, the vector pipeline computing units 164 and 165, and the vector pipeline computing units 166 and 167 at different timings. In the case of (3) as well, pieces of operation control information are output to the vector pipeline computing units 160 to 167 at the same output timing as that for the vector pipeline computing units 166 and 167 which operate at the last timing.

The vector processing unit 400 shown in Fig. 7 can omit the timing adjusting unit 15 as compared with the vector processing apparatus 300 shown in Fig. 4, and has an effect of being capable of reducing the hardware amount.

The operation control information generating unit 12A shown in Fig. 8 is identical to the operation control information generating unit 12 shown in Fig. 1 except for the control function in the case of (3).

As described above, according to the above embodiments, the processing start timings of the vector pipeline computing units 160 to 167 can be shifted regardless of whether load and store instructions are to be executed. This makes it possible to reduce noise caused by simultaneous operation and prevent the occurrence of malfunction in various kinds of computations as compared with the prior art.

The vector processing apparatus 100 having the vector pipeline computing units 160 to 167 which process vector element data has been described above. However, the present invention can be applied to an information processing apparatus having a plurality of computing units. Performing control to shift the computation start timings of the plurality of computing units makes it possible to reduce noise due to simultaneous operations.

In addition, the above vector processing apparatuses 100 to 400 or the information processing apparatus can be formed on one LSI. In addition, the vector processing apparatuses 100 to 400 or the information processing apparatus can be formed on a plurality of LSIs.

## Claims

1. A vector processing apparatus comprising:
a plurality of vector pipeline computing units (160 - 167, 160A - 167A) which operate in accordance with operation control information for instructing start and execution of processing; **characterized by** further comprising
an instruction control unit (10, 10A) which generates operation control information in accordance with noise reduction designation information and sequentially outputs the operation control information to said respective vector pipeline computing units with a shift of one or more clock cycles.

2. An apparatus according to claim 1, further comprising a clock generating unit (20) which outputs a clock,
wherein said instruction control unit comprises an operation control information generating unit (12, 12A) which sequentially outputs operation control information to said respective vector pipeline computing units on the basis of a clock input from said clock generating unit.

3. An apparatus according to claim 2, wherein
said instruction control unit comprises an instruction execution control unit (13) which outputs control information for execution of a vector instruction,
said operation control information generating unit comprises a shift register (121) to which control information from said instruction execution control unit is input and which operates in accordance with a clock from said clock generating unit, and
said shift register outputs pieces of control information stored in stages of said shift register as pieces of operation control information to said respective vector pipeline computing units.

4. An apparatus according to claim 1, wherein each of said vector pipeline computing units comprises:
at least one data holding unit (VR0 - VRn) which holds vector element data (definition); and
an internal selecting unit (SOUT, SIO) which outputs vector element data held in one of said data holding units to outside said vector pipeline computing unit on the basis of an operation control information input from said instruction control unit.

5. An apparatus according to claim 4, further comprising a timing adjusting unit (15) which outputs, at the same timing, vector element data input from a plurality of vector pipeline computing units with a shift of one or more clock cycles.

6. An apparatus according to claim 5, wherein said timing adjusting unit comprises delay circuits (151 - 155) which output vector element data input from said vector pipeline computing units (160 - 165) upon delaying the vector element data by times corresponding to said vector pipeline computing units.

7. An apparatus according to claim 5, wherein said timing adjusting unit comprises delay circuits (151 - 155) which output vector element data input from said vector pipeline computing units (160 - 165) upon delaying the vector element data by times corresponding to said vector pipeline computing units, the times corresponding to said vector pipeline computing units being times for canceling out delay times given when said instruction control unit outputs operation control information to other vector pipeline computing units.

8. An apparatus according to claim 1, wherein said instruction control unit comprises:
an operation designating unit (11) which stores noise reduction operation designation information indicating whether to execute noise reduction operation; and
an operation control information generating unit (12, 12A) which when noise reduction operation designation information input from said operation designating unit does not designate noise reduction operation, outputs operation control information to said respective vector pipeline computing units at the same timing, and when the noise reduction operation designation information designates noise reduction operation, outputs operation control information to said respective vector pipeline computing units with a shift of one or more clock cycles.

9. An apparatus according to claim 8, wherein
said instruction control unit further comprises an instruction execution control unit (13) which outputs control information for execution of a vector instruction, and
said operation control information generating unit comprises a shift register (121) to which control information from said instruction execution control unit is input, and a control selecting unit (CSO - CS3) which outputs, to each of said vector pipeline computing units, one of control information stored in a specific stage of said shift register and control information stored in each stage of said shift register, as operation control information, on the basis of noise reduction operation designation information input from said operation designating unit.

10. An apparatus according to claim 1, wherein
said instruction control unit comprises an operation designating unit (11) which stores noise reduction operation designation information for indicating whether to execute noise reduction operation, and
an operation control information generating unit (12A) which when noise reduction operation designation information input from said operation designating unit does not designate noise reduction operation, outputs operation control information to said respective vector pipeline computing units at the same timing, and when the noise reduction operation designation information designates noise reduction operation, outputs operation control information to said respective vector pipeline computing units in accordance with a vector pipeline computing unit which operates at a last timing, in executing a vector instruction spanning at least two of said vector pipeline computing units, and outputs the operation control information to said vector pipeline computing units with a shift of one or more clock cycles in executing a vector instruction which does not span at least two of said vector pipeline computing units.

11. An apparatus according to claim 10, wherein
said instruction control unit further comprises an instruction execution control unit (13) which outputs control information for execution of a vector instruction, and
said operation control information generating unit comprises a shift register (121) to which control information from said instruction execution control unit is input, and a control selecting unit (CSO - CS3) which outputs, to each of said vector pipeline computing units, one of control information stored in a first stage of said shift register, control information stored in a last stage of said shift register, and control information stored in each stage of said shift register, as operation control information, on the basis of control information input from said instruction execution control unit and noise reduction operation designation information input from said operation designating unit.

12. An apparatus according to claim 1, further comprising an LSI on which said vector pipeline computing units and said instruction control unit are formed.

13. A vector processing method **characterized by** comprising:
the step (10, 10A) of generating operation control information in accordance with noise reduction information for instructing start and execution of processing and sequentially outputting the operation control information to a plurality of vector pipeline computing units with a shift of one or more clock cycles; and
the step (160 - 167, 160A - 167A) of causing the vector pipeline computing units, to which the operation control information has been input with a shift of one or more clock cycles, to sequentially start and execute processing.

14. A method according to claim 13, wherein the step of outputting the operation control information comprises the step (12, 12A) of sequentially outputting the operation control information to the respective vector pipeline computing units.

15. A method according to claim 13, wherein the step of starting and executing the processing comprises the step of causing the respective vector pipeline computing units to sequentially output vector element data to a timing adjusting unit.

16. A method according to claim 15, further comprising the step (15) of causing the timing adjusting unit to output, at the same timing, vector element data input from the respective vector pipeline computing units with a shift of one or more clock cycles.

17. A method according to claim 13, wherein the step of outputting the operation control information comprises the step (12, 12A) of outputting the operation control information with a shift of one or more clock cycles when execution of noise reduction operation is instructed.

18. A method according to claim 13, wherein the step of outputting the operation control information comprises the step (12A) of, when execution of noise reduction operation is instructed, outputting operation control information with a shift of one or more clock cycles in executing a vector instruction which does not span at least two of the vector pipeline computing units.

## Patentansprüche

1. Vektorverarbeitende Vorrichtung, welche Folgendes aufweist:
eine Vielzahl von Vektorpipelineberechnungseinheiten (160 - 167, 160A - 167A), die gemäß Betriebssteuerungsinformationen zum Anweisen des Beginns und der Ausführung der Verarbeitung arbeiten, **dadurch gekennzeichnet, dass** sie des Weiteren Folgendes aufweist:
eine Befehlssteuerungseinheit (10, 10A), welche Betriebssteuerungsinformationen gemäß Rauschverringerungszielinformationen erzeugt und die Betriebssteuerungsinformationen sequentiell an die entsprechenden Vektorpipelineberechnungseinheiten mit einer Verschiebung von einem oder mehreren Taktzyklen ausgibt.

2. Vorrichtung nach Anspruch 1, welche des Weiteren eine Takterzeugungseinheit (20) aufweist, die einen Takt ausgibt, **dadurch gekennzeichnet, dass** die Befehlssteuerungseinheit eine Betriebssteuerungsinformationserzeugungseinheit (12, 12A) aufweist, die sequentiell Betriebssteuerungsinformationen an die jeweiligen Vektorpipelineberechnungseinheiten auf der Basis einer Takteingabe von der Takterzeugungseinheit ausgibt.

3. Vorrichtung nach Anspruch 2, **dadurch gekennzeichnet, dass**
die Befehlssteuerungseinheit eine Befehlsausführungssteuerungseinheit (13) aufweist, die Steuerungsinformationen zur Ausführung eines Vektorbefehls ausgibt;
die Betriebssteuerungsinformationserzeugungseinheit ein Schieberegister (121) aufweist, in welches Steuerungsinformationen von der Befehlsausführungssteuerungseinheit eingegeben werden und welches gemäß einem Takt von der Takterzeugungseinheit arbeitet; und dass
das Schieberegister Teile der in Stufen des Schieberegisters gespeicherten Steuerungsinformationen als Teile von Betriebssteuerungsinformationen an jeweilige Vektorpipelineberechnungseinheiten ausgibt.

4. Vorrichtung nach Anspruch 1, **dadurch gekennzeichnet, dass** jede der Vektorpipelineberechnungseinheiten Folgendes aufweist:
mindestens eine Datenhalteeinheit (VR0 - VRn), die Vektorelementdaten (Definition) bereithält; und
eine interne Auswahleinheit (SOUT, SIO), die in einer der Datenhalteeinheiten bereitgehaltene Vektorelementdaten außerhalb der Vektorpipelineberechnungseinheit auf der Basis einer Betriebssteuerungsinformationseingabe von der Befehlssteuerungseinheit ausgibt.

5. Vorrichtung nach Anspruch 4, welche des Weiteren eine Timing-Anpassungseinheit (15) aufweist, die bei demselben Timing von einer Vielzahl von Vektorpipelineberechnungseinheiten eingegebene Vektorelementdaten mit einer Verschiebung von einem oder mehreren Taktzyklen ausgibt.

6. Vorrichtung nach Anspruch 5, **dadurch gekennzeichnet, dass** die Timing-Anpassungseinheit Verzögerungsschaltkreise (151 - 155) aufweist, die von den Vektorpipelineberechnungseinheiten (160 - 165) eingegebene Vektorelementdaten ausgibt, bei Verzögerung der Vektorelementdaten um die Zeit, die den Vektorpipelineberechnungseinheiten entspricht.

7. Vorrichtung nach Anspruch 5, **dadurch gekennzeichnet, dass** die Timing-Anpassungseinheit Verzögerungsschaltkreise (151 - 155) aufweist, die von den Vektorpipelineberechnungseinheiten (160 - 165) eingegebene Vektorelementdaten ausgibt, bei Verzögerung der Vektorelementdaten um die Zeit, die den Vektorpipelineberechnungseinheiten entspricht, wobei es sich bei den den Vektorpipelineberechnungseinheiten entsprechenden Zeiten um Zeiten zum Neutralisieren von Verzögerungszeiten handelt, die gegeben sind, wenn die Befehlssteuerungseinheit Betriebssteuerungsinformationen an andere Vektorpipelineberechnungseinheiten ausgibt.

8. Vorrichtung nach Anspruch 1, **dadurch gekennzeichnet, dass** die Befehlssteuerungseinheit Folgendes aufweist:
eine Betriebszieleinheit (11), die Rauschverringerungsbetriebszielinformationen speichert, die angeben, ob ein Rauschverringerungsvorgang durchgeführt werden soll; und
eine Betriebssteuerungsinformationserzeugungseinheit (12, 12A), die, wenn eine Rauschverringerungsbetriebszielinformation, eingegeben von der Betriebszieleinheit, keinen Rauschverringerungsvorgang bestimmt, Betriebssteuerungsinformationen an die jeweiligen Vektorpipelineberechnungseinheiten bei demselben Timing ausgibt, und die, wenn die Rauschverringerungsbetriebszielinformationen einen Rauschverringerungsbetrieb bestimmt, Betriebssteuerungsinformationen an die jeweiligen Vektorpipelineberechnungseinheiten mit einer Verschiebung von einem oder mehreren Taktzyklen ausgibt.

9. Vorrichtung nach Anspruch 8, **dadurch gekennzeichnet, dass**
die Befehlssteuerungseinheit des Weiteren eine Befehlsausführungssteuerungseinheit (13) aufweist, die Steuerungsinformationen zur Ausführung eines Vektorbefehls ausgibt; und dass
die Betriebssteuerungsinformationserzeugungseinheit ein Schieberegister (121), in welches Steuerungsinformationen von der Befehlsausführungssteuerungseinheit eingegeben werden, und eine Steuerungsauwahleinheit (CSO - CS3) aufweist, die an jede der Vektorpipelineberechnungseinheiten eine der in einer spezifischen Stufe des Schieberegisters gespeicherten Steuerungsinformationen sowie in jeder Stufe des Schieberegisters gespeicherte Steuerungsinformationen als Betriebssteuerungsinformationen auf der Basis der Rauschverringerungsbetriebszielinformation, eingegeben von der Betriebszieleinheit, ausgibt.

10. Vorrichtung nach Anspruch 1, **dadurch gekennzeichnet, dass** die Befehlssteuerungseinheit eine Betriebszieleinheit (11) aufweist, die Rauschverringerungsbetriebszielinformationen speichert, um anzugeben, ob ein Rauschverringerungsvorgang durchgeführt werden soll; und dass
eine Betriebssteuerungsinformationserzeugungseinheit (12A), die, wenn die Rauschverringerungsbetriebszielinformation, eingegeben von der Betriebszieleinheit, keinen Rauschverringerungsvorgang bestimmt, Betriebssteuerungsinformationen an die jeweiligen Vektorpipelineberechnungseinheiten bei demselben Timing ausgibt, und die, wenn die Rauschverringerungsbetriebszielinformationen einen Rauschverringerungsvorgang bestimmen, Betriebssteuerungsinformationen an die jeweiligen Vektorpipelineberechnungseinheiten gemäß einer Vektorpipelineberechnungseinheit ausgibt, die bei einem letzten Timing arbeitet, um einen Vektorbefehl auszuführen, der mindestens zwei der Vektorpipelineberechnungseinheiten umfasst, und die Betriebssteuerungsinformationen an die Vektorpipelineberechnungseinheiten mit einer Verschiebung von einem oder mehreren Taktzyklen ausgibt, um einen Vektorbefehl auszuführen, der nicht mindestens zwei der Vektorpipelineberechnungseinheiten umfasst.

11. Vorrichtung nach Anspruch 10, **dadurch gekennzeichnet, dass**
die Befehlssteuerungseinheit des Weiteren eine Befehlsausführungssteuerungseinheit (13) aufweist, die Steuerungsinformationen zur Ausführung eines Vektorbefehls ausgibt; und dass
die Betriebssteuerungsinformationenerzeugungseinheit ein Schieberegister (121), bei dem Steuerungsinformationen von der Befehlsausführungssteuerungseinheit eingegeben werden, sowie eine Steuerungsauswahleinheit (CS0 - CS3) aufweist, die an jede der Vektorpipelineberechnungseinheiten eine der in einer ersten Stufe des Schieberegisters gespeicherte Steuerungsinformationen, in einer letzten Stufe des Schieberegisters gespeicherten Steuerungsinformationen und in jeder Stufe des Schieberegisters gespeicherte Steuerungsinformationen als Betriebssteuerungsinformationen auf der Basis der Steuerungsinformationseingabe von der Befehlsausführungssteuerungseinheit und der Rauschverringerungsbetriebszielinformationseingabe von der Betriebszieleinheit ausgibt.

12. Vorrichtung nach Anspruch 1, welche des Weiteren eine LSI bzw. Large Scale Integration aufweist, auf welcher Vektorpipelineberechnungseinheiten und die Befehlssteuerungseinheit ausgebildet sind.

13. Vektorverarbeitetendes Verfahren, welches **dadurch gekennzeichnet ist, dass** es Folgendes aufweist:
den Schritt (10, 10A) der Erzeugung von Betriebssteuerungsinformationen gemäß Rauschverringerungsinformationen zum Anweisen des Beginns und zur Ausführung der Verarbeitung und der sequentiellen Ausgabe der Betriebssteuerungsinformationen an eine Vielzahl von Vektorpipelineberechnungseinheiten mit einer Verschiebung von einem oder mehreren Taktzyklen; und
den Schritt (160 - 167, 160A - 167A), die Vektorpipelineberechnungseinheiten, bei denen die Betriebsteuerungsinformationen mit einer Verschiebung von einem oder mehreren Taktzyklen eingegeben wurden, dazu zu veranlassen, die Verarbeitung sequentiell zu beginnen und auszuführen.

14. Verfahren nach Anspruch 13, **dadurch gekennzeichnet, dass** der Schritt der Ausgabe der Betriebssteuerungsinformationen den Schritt (12, 12A) der sequentiellen Ausgabe der Betriebssteuerungsinformationen an die jeweiligen Vektorpipelineberechnungseinheiten umfasst.

15. Verfahren nach Anspruch 13, **dadurch gekennzeichnet, dass** der Schritt des Beginns und der Ausführung der Verarbeitung den Schritt umfasst, dass die jeweiligen Vektorpipelineberechnungseinheiten dazu veranlasst werden, Vektorelementdaten sequentiell an eine Timing-Anpassungseinheit auszugeben.

16. Verfahren nach Anspruch 15, welches des weiteren den Schritt (15) umfasst, dass die Timing-Anpassungseinheit dazu veranlasst wird, bei demselben Timing Vektorelementdaten von den jeweiligen Vektorpipelineberechnungseinheiten mit einer Verschiebung von einem oder mehreren Taktzyklen auszugeben.

17. Verfahren nach Anspruch 13, **dadurch gekennzeichnet, dass** der Schritt der Ausgabe der Betriebssteuerungsinformationen den Schritt (12, 12A) der Ausgabe der Betriebssteuerungsinformationen mit einer Verschiebung von einem oder mehreren Taktzyklen aufweist, wenn die Ausführung eines Rauschverringerungsvorgangs angewiesen wird.

18. Verfahren nach Anspruch 13, **dadurch gekennzeichnet, dass** der Schritt der Ausgabe der Betriebssteuerungsinformationen den Schritt (12A), wenn die Ausführung eines Rauschverringerungsvorgangs angewiesen wird, der Ausgabe von Betriebssteuerungsinformationen mit einer Verschiebung von einem oder mehreren Taktzyklen zur Ausführung eines Vektorbefehls, der nicht mindestens zwei der Vektorpipelineberechnungseinheiten umfasst, aufweist.

## Revendications

1. Dispositif de traitement vectoriel, comprenant :
une pluralité d'unités de calcul vectoriel en pipeline (160, 167, 160A - 167A) qui fonctionnent selon les informations de contrôle des opérations pour donner les consignes de démarrage et d'exécution du traitement ; **caractérisé en ce qu'**il comprend en outre :
une unité de contrôle d'instructions (10, 10A) qui génère des informations de contrôle des opérations selon des informations de désignation de réduction de bruit et transmet en séquence les informations de contrôle des opérations auxdites unités de calcul vectoriel en pipeline respectives avec un décalage d'un ou plusieurs cycles d'horloge.

2. Dispositif selon la revendication 1, comprenant en outre une unité de génération d'horloge (20) qui produit une horloge,
dans lequel ladite unité de contrôle d'instructions comprend une unité de génération d'informations de contrôle des opérations (12, 12A) qui transmet en séquence des informations de contrôle des opérations auxdites unités de calcul vectoriel en pipeline respectives sur la base d'une entrée d'horloge provenant de ladite unité de génération d'horloge.

3. Appareil selon la revendication 2, dans lequel
ladite unité de contrôle d'instructions comprend une unité de contrôle d'exécution d'instructions (13) qui transmet des informations de contrôle pour l'exécution d'une instruction vectorielle,
ladite unité de génération d'informations de contrôle des opérations comprend un registre à décalage (121) dans lequel sont entrées les informations de contrôle provenant de ladite unité de contrôle d'exécution d'instructions et qui fonctionne selon une horloge provenant de ladite unité de génération d'horloge, et
ledit registre à décalage transmet des informations de contrôle stockées dans des étages dudit registre à décalage en tant qu'informations de contrôle des opérations auxdites unités de calcul vectoriel en pipeline respectives.

4. Dispositif selon la revendication 1, dans lequel chacune desdites unités de calcul vectoriel en pipeline comprend :
au moins une unité de maintien de données (VR0 - VRn) qui maintient les données d'éléments vectoriels (définition) ; et
une unité de sélection interne (SOUT, SIO) qui transmet des données d'éléments vectoriels conservées dans une desdites unités de maintien de données vers l'extérieur de ladite unité de calcul vectoriel en pipeline sur la base d'une entrée d'informations de contrôle des opérations provenant de ladite unité de contrôle d'instructions.

5. Dispositif selon la revendication 4, comprenant en outre une unité de réglage de temps (15) qui transmet, au même moment, des données d'éléments vectoriels entrées à partir d'une pluralité d'unités de calcul vectoriel en pipeline avec un décalage d'un ou plusieurs cycles d'horloge.

6. Dispositif selon la revendication 5, dans lequel ladite unité de réglage de temps comprend des circuits de retard (151 - 155) qui transmettent des données d'éléments vectoriels entrées à partir desdites unités de calcul vectoriel en pipeline (160 - 165) lors d'un retardement des données d'éléments vectoriels de temps correspondant auxdites unités de calcul vectoriel en pipeline.

7. Dispositif selon la revendication 5, dans lequel ladite unité de réglage de temps comprend des circuits de retard (151 - 155) qui transmettent des données d'éléments vectoriels entrées à partir desdites unités de calcul vectoriel en pipeline (160 - 165) lors du retardement des données d'éléments vectorielles de temps correspondant auxdites unités de calcul vectoriel en pipeline, les temps correspondant auxdites unités de calcul vectoriel en pipeline étant des temps pour annuler les temps de retard donnés lorsque ladite unité de contrôle d'instructions transmet des informations de contrôle des opérations à d'autres unités de calcul vectoriel en pipeline.

8. Dispositif selon la revendication 1, dans lequel ladite unité de contrôle d'instructions comprend :
une unité de désignation d'opération (11) qui stocke les informations de désignation d'opération de réduction de bruit indiquant s'il faut exécuter une opération de réduction de bruit ; et
une unité de génération d'informations de contrôle des opérations (12, 12A) qui, lorsque les informations de désignation d'opération de réduction de bruit provenant de ladite unité de désignation d'opération ne désignent pas l'opération de réduction de bruit, transmet des informations de contrôle des opérations auxdites unités de calcul vectoriel en pipeline respectives au même moment, et lorsque les informations de désignation d'opération de réduction de bruit désignent une opération de réduction de bruit, transmet les informations de contrôle des opérations auxdites unités de calcul vectoriel en pipeline respectives avec un décalage d'un ou plusieurs cycles d'horloge.

9. Dispositif selon la revendication 8, dans lequel
ladite unité de contrôle d'instructions comprend en outre une unité de contrôle d'exécution d'instructions (13) qui transmet des informations de contrôle pour l'exécution d'une instruction vectorielle, et
ladite unité de génération d'informations de contrôle des opérations comprend un registre à décalage (121) dans lequel sont entrées des informations de contrôle provenant de ladite unité de contrôle d'exécution d'instructions, et une unité de sélection de contrôle (CSO - CS3) qui transmet, à chacune desdites unités de calcul vectoriel en pipeline, une des informations de contrôle stockées dans un étage spécifique dudit registre à décalage et les informations de contrôle stockées dans chaque étage dudit registre à décalage, en tant qu'informations de contrôle des opérations, sur la base des informations de désignation d'opération de réduction de bruit entrées à partir de ladite unité de désignation d'opération.

10. Dispositif selon la revendication 1, dans lequel
ladite unité de contrôle d'instructions comprend une unité de désignation d'opération (11) qui stocke les informations de désignation d'opération de réduction de bruit pour indiquer s'il faut exécuter l'opération de réduction de bruit, et
une unité de génération d'informations de contrôle des opérations (12A) qui, lorsque les informations de désignation d'opération de réduction de bruit entrées à partir de ladite unité de désignation d'opération ne désignent pas l'opération de réduction de bruit, transmet des informations de contrôle des opérations auxdites unités de calcul vectoriel en pipeline respectives au même moment, et lorsque les informations de désignation d'opération de réduction de bruit désignent une opération de réduction de bruit, transmet les informations de contrôle des opérations auxdites unités de calcul vectoriel en pipeline respectives selon une unité de calcul vectoriel en pipeline qui fonctionne à un dernier moment, lors de l'exécution d'une instruction vectorielle couvrant au moins deux desdites unités de calcul vectoriel en pipeline, et transmet les informations de contrôle des opérations auxdites unités de calcul vectoriel en pipeline avec un décalage d'un ou plusieurs cycles d'horloge lors de l'exécution d'une instruction vectorielle qui ne couvre pas au moins deux desdites unités de calcul vectoriel en pipeline.

11. Dispositif selon la revendication 10, dans lequel
ladite unité de contrôle d'instructions comprend en outre une unité de contrôle d'exécution d'instructions (13) qui transmet des informations de contrôle pour l'exécution d'une instruction vectorielle, et
ladite unité de génération d'informations de contrôle des opérations comprend un registre à décalage (121) dans lequel sont entrées des informations de contrôle provenant de ladite unité de contrôle d'exécution d'instructions, et une unité de sélection de contrôle (CSO - CS3) qui transmet, à chacune desdites unités de calcul vectoriel en pipeline, une des informations de contrôle stockées dans un premier étage dudit registre à décalage, des informations de contrôle stockées dans un dernier étage dudit registre à décalage, et des informations de contrôle stockées dans chaque étage dudit registre à décalage, en tant qu'informations de contrôle des opérations, sur la base des informations de contrôle entrées à partir de ladite unité de contrôle d'exécution d'instructions et des informations de désignation d'opération de réduction de bruit entrées à partir de ladite unité de désignation d'opération.

12. Dispositif selon la revendication 1, comprenant en outre un LSI sur lequel sont formées lesdites unités de calcul vectoriel en pipeline et ladite unité de contrôle d'instructions.

13. Procédé de traitement vectoriel **caractérisé en ce qu'**il comprend :
l'étape (10, 10A) consistant à générer des informations de contrôle des opérations selon les informations de réduction de bruit pour donner la consigne de lancement et d'exécution du traitement et transmettre en séquence les informations de contrôle des opérations à une pluralité d'unités de calcul vectoriel en pipeline avec un décalage d'un ou plusieurs cycles d'horloge ; et
l'étape (160 - 167, 160A - 167A) consistant à entraîner le démarrage et l'exécution en séquence du traitement des unités de calcul vectoriel en pipeline, dans lesquelles des informations de contrôle des opérations ont été entrées avec un décalage d'un ou plusieurs cycles d'horloge.

14. Procédé selon la revendication 13, dans lequel l'étape de transmission des informations de contrôle des opérations comprend l'étape (12, 12A) consistant à transmettre en séquence les informations de contrôle des opérations aux unités de calcul vectoriel en pipeline respectives.

15. Procédé selon la revendication 13, dans lequel l'étape consistant à lancer et exécuter le traitement comprend l'étape consistant à entraîner la transmission en séquence par les unités de calcul vectoriel en pipeline respectives des données d'éléments vectoriels à une unité de réglage de temps.

16. Procédé selon la revendication 15, comprenant en outre l'étape (15) consistant à entraîner la transmission par l'unité de réglage de temps, au même moment, des données d'éléments vectoriels entrées à partir des unités de calcul vectoriel en pipeline respectives avec un décalage d'un ou plusieurs cycles d'horloge.

17. Procédé selon la revendication 13, dans lequel l'étape de transmission des informations de contrôle des opérations comprend l'étape (12, 12A) consistant à transmettre les informations de contrôle des opérations avec un décalage d'un ou plusieurs cycles d'horloge lorsque la consigne d'exécution de l'opération de réduction de bruit est donnée.

18. Procédé selon la revendication 13, dans lequel l'étape de transmission des informations de contrôle des opérations comprend l'étape (12A) consistant, lorsque la consigne d'exécution de l'opération de réduction de bruit est donnée, à transmettre des informations de contrôle des opérations avec un décalage d'un ou plusieurs cycles d'horloge lors de l'exécution d'une instruction vectorielle qui ne couvre pas au moins deux des unités de calcul vectoriel en pipeline.
